Europäisches Patentamt

**European Patent Office**

Office européen des brevets

(19)

(11) Numéro de publication: **0 203 852 B1**

(12)

# FASCICULE DE BREVET EUROPEEN

(45) Date de publication du fascicule du brevet:
04.10.89

(51) Int. Cl.⁴: **F16G 5/16, F16H 9/24**

(21) Numéro de dépôt: **86401050.9**

(22) Date de dépôt: **16.05.86**

(54) **Courroie à double effet notamment destinée à un variateur de vitesse à poulies de diamètre utile variable.**

(30) Priorité: **20.05.85 FR 8507573**

(43) Date de publication de la demande:
**03.12.86 Bulletin 86/49**

(45) Mention de la délivrance du brevet:
**04.10.89 Bulletin 89/40**

(84) Etats contractants désignés:
**AT BE CH DE GB IT LI LU NL SE**

(56) Documents cités:
**EP-A- 0 118 892**
**EP-A- 0 124 322**
**EP-A- 0 125 757**
**EP-A- 0 153 453**
**WO-A-83/04291**
**DE-A- 2 821 698**

(73) Titulaire: **Duport, Louis, 109, rue Colbert,
F-92700 Colombes (Hauts de Seine)(FR)**

(72) Inventeur: **Duport, Louis, 109, rue Colbert,
F-92700 Colombes (Hauts de Seine)(FR)**

(74) Mandataire: **Cabinet Pierre HERRBURGER,
115, Boulevard Haussmann, F-75008 Paris(FR)**

ACTORUM AG

## Description

La présente invention concerne une courroie à double effet notamment destinée à un variateur de vitesse à poulies de diamètre utile variable, courroie formée d'un ensemble d'éléments rigides à section trapézoïdale correspondant à la section des poulies, chaque élément ayant une base, une partie intermédiaire et un talon, les éléments étant articulés les uns par rapport aux autres et prenant appui les uns sur les autres. Une telle courroie à double effet est connue selon WO-A 83/04 291.

De manière générale, il existe déjà différents variateurs de vitesses en particulier le dispositif DAF de la société hollandaise DAF qui utilise deux poulies à diamètre variable, l'une des poulies étant reliée à la sortie du moteur, l'autre à l'arbre attaquant les roues motrices. Ces deux poulies sont reliées par une courroie trapézoïdale. Le rapport entre la vitesse du moteur et celle des roues est modifié par le changement du diamètre utile des poulies.

Cette courroie trapézoïdale, comme d'ailleurs les courroies trapézoïdales utilisées par exemple pour l'entraînement de la pompe à eau, du ventilateur, etc. est une courroie en caoutchouc ou matière synthétique élastique, renforcée par une garniture en forme de câble noyée dans la masse de caoutchouc.

Le variateur de vitesses DAF donne satisfaction pour la transmission de faibles puissances et, de ce fait, les variateurs DAF ne peuvent être utilisés que sur de petits véhicules.

Il existe un second variateur du type de celui ci-dessus (variateur VAN DORNE) qui, au lieu de transmettre le couple par une courroie travaillant en traction, transmet ce couple par compression par un empilage d'éléments métalliques travaillant à la compression; cet empilage d'éléments métalliques passe sur deux poulies de diamètre utile variable, suivant leur rapport de vitesses.

Ces éléments métalliques ont, sur leurs deux côtés, des gorges pour recevoir des lames métalliques de guidage formant une boucle. Ces lames ne participent pas à la transmission du couple mais sont uniquement destinées à guider les plaquettes sur la trajectoire ainsi définie. Ces lames de guidage sont libres et se déforment suivant le diamètre utile des poulies.

Un tel variateur VAN DORNE, notamment évoqué dans le document WO-A 83/04291, a été appliqué à des véhicules permettant de transmettre des couples de 120 Nm et même de l'ordre de 180 Nm, c'est-à-dire des moteurs d'une cylindrée de l'ordre de 2 litres.

Ce dispositif travaillant par compression est intéressant. Toutefois, sa réalisation est relativement délicate à cause des lamelles de guidage qui doivent maintenir les éléments empilés dans le tronçon de ce système travaillant à la compression.

Les différents dispositifs, outre le dispositif VAN DORNE, décrits au brevet WO-A 83/04 291, sont d'une réalisation encore plus complexe que le dispositif VAN DORNE puisqu'il s'agit d'une chaîne munie sur son côté extérieur d'un feuillard assurant ou complétant le guidage. La présence de ce feuillard complique les moyens auxiliaires de guidage et rendent l'entretien et le remplacement de cette courroie très difficiles. Le glissement et les alternances de mise en tension et en compression du feuillard doivent le soumettre à une fatigue et une usure excessive.

La présente invention a pour but de créer un dispositif du type courroie trapézoïdale, permettant de transmettre des couples entre deux poulies de diamètre utile variable, de façon à travailler à la compression et à la traction.

A cet effet, l'invention concerne une courroie à double effet du type ci-dessus, caractérisée en ce que:

– l'articulation des éléments se fait à leur base,
– les talons ont des surfaces par lesquelles deux éléments consécutifs peuvent s'appuyer l'un contre l'autre,
– un composant élastique relie les éléments au moins au niveau de leur partie intermédiaire.

Une telle courroie rigide permet de travailler en compression et en traction, ce qui facilite la réalisation de variateurs de vitesse à poulies, variateurs dans lesquels la courroie constitue l'élément principal.

La structure de la courroie, selon l'invention, et le fait qu'elle travaille à double effet, permettent d'aboutir à une courroie très fiable et susceptible de transmettre des couples relativement élevés, pour les moteurs de véhicules automobiles de puissance moyenne ou élevée sans limiter l'utilisation d'un tel variateur au moteur de très faible puissance. De plus, une courroie à double effet, selon l'invention, peut également s'utiliser avantageusement sur des variateurs de véhicules de faible puissance, car elle évite dans ce cas les problèmes de remplacement de la courroie.

Suivant une autre caractéristique, la partie intermédiaire des éléments a une surface diminuée par rapport à la surface trapézoïdale d'ensemble de l'élément pour laisser de la place au composant élastique.

Le composant élastique de la courroie forme ainsi un élément continu sur toute la longueur de la courroie, ce qui est intéressant pour la résistance de la courroie, son adhérence, la transmission régulière des efforts et la douceur de fonctionnement.

Suivant une autre caractéristique de l'invention, l'élément comporte à sa base des manchons de palier destinés à être combinés respectivement aux manchons homologues d'un élément amont et d'un élément aval par un axe d'articulation.

Les éléments peuvent ainsi se réunir par des articulations à la manière de charnières. La base constitue donc une chaîne renforçant la courroie en traction et permettant aux talons de venir en appui pour transmettre les efforts à la compression.

Suivant une solution particulièrement avantageuse, dans le mode de réalisation ci-dessus, l'élément comporte un manchon de palier médian et deux manchons qui, en vue de face, se situent de part et d'autre du manchon médian.

Suivant une autre caractéristique de l'invention, l'élément comporte à sa base de chaque côté un logement semi-cylindrique pour recevoir une partie d'un axe d'articulation.

Dans le cas du mode de réalisation ci-dessus, il est particulièrement intéressant que les faces de la base soient diminuées et ne laissent des logements d'axe que de dimensions inférieures à celles d'un demi cylindre, de façon à pouvoir rapprocher les bases lors du moulage du composant élastique pour induire une tension interne pour le composant élastique.

De façon particulièrement avantageuse, les éléments rigides sont en métal. Ces éléments pourraient également être en matière synthétique très résistante.

L'usinage de ces éléments et plus généralement leur fabrication ne présentent aucune difficulté et peuvent être fabriqués en série de façon automatique.

Suivant une autre caractéristique de l'invention, la section théorique d'un élément selon un plan parallèle au plan médian de la courroie, est une section rectangulaire. Cela signifie que les axes géométriques des axes venant dans les logements de la base réunissant ou articulant deux éléments l'un sur l'autre, sont situés dans le prolongement des faces d'appui des talons. Ainsi, le brin de la courroie qui est en compression prend une forme rectiligne, ce qui correspond aux meilleures conditions pour la transmission de l'effort de compression.

Suivant une autre caractéristique, l'invention concerne également un procédé de fabrication d'une courroie à double effet telle que décrite ci-dessus. Selon ce procédé, on réalise la section théorique de l'élément avec une section rectangulaire.

La présente invention sera décrite de façon plus détaillée à l'aide des dessins annexés dans lesquels:

- La figure 1 est une vue schématique d'une courroie à double effet passant sur deux poulies de diamètre variable,
- La figure 2 est une vue de côté, coupée, d'un élément de courroie selon l'invention,
- La figure 3 est une vue de face de l'élément de la figure 2,
- La figure 4 est une vue de côté, coupée, d'un second mode de réalisation d'un élément de courroie, selon l'invention,
- La figure 5 est une vue de face de l'élément de la figure 4,
- La figure 6 montre schématiquement le procédé de fabrication d'une courroie selon l'invention.

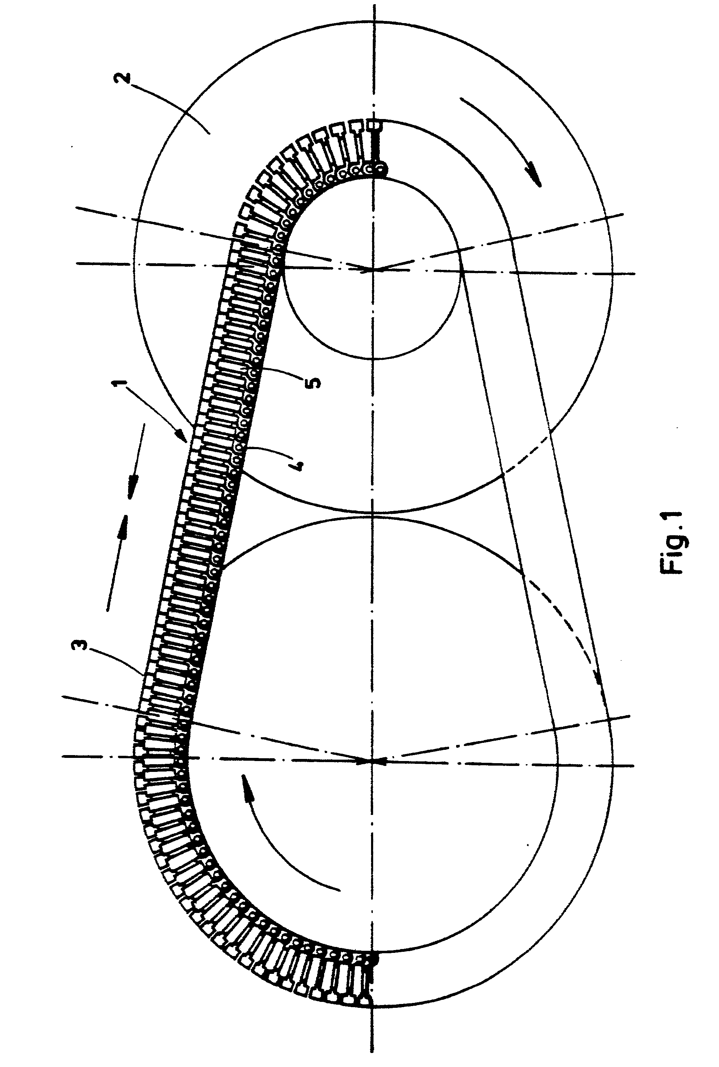

Selon la figure 1, la courroie à double effet de l'invention est représentée comme appliquée à un variateur de vitesses à poulies de diamètre utile variable. Cette courroie 1 passe sur une première poulie 2 et une seconde poulie 3. La première poulie est représentée avec un diamètre utile faible et la seconde poulie avec un grand diamètre utile.

La courroie à double effet se compose d'une part d'un ensemble d'éléments 4 à section trapézoïdale correspondant à la section des poulies 2, 3 et, d'autre part, un composant élastique 5 prévu au niveau de la partie intermédiaire des éléments et reliant ceux-ci de façon élastique. Ces éléments 4 comportent chacun une base et un talon reliés par une partie intermédiaire.

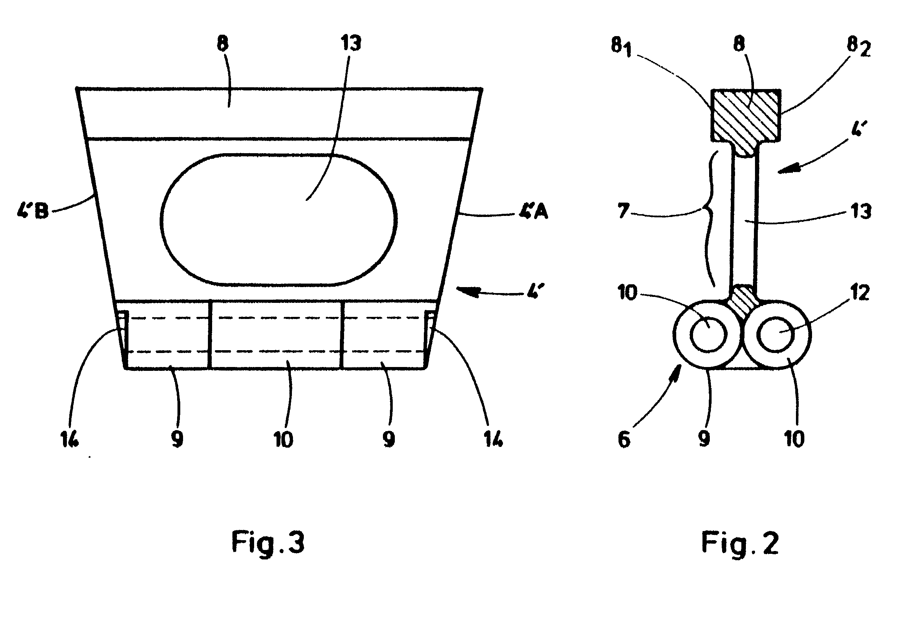

Selon les figures 2 et 3, un premier exemple de réalisation d'un élément 4 se compose d'une base 6, d'une partie de liaison 7 et d'un talon 8. La base 6 est formée de deux manchons cylindriques 9 formant paliers d'axe avant ou arrière et d'un manchon 10 formant un palier intermédiaire aux deux manchons 9 et situé à l'arrière ou à l'avant par rapport aux manchons 9. Les deux manchons 9 sont écartés d'une distance égale ou supérieure à la longueur du manchon 10. Les axes géométriques des manchons 9 sont coaxiaux et parallèles à l'axe géométrique du manchon 10; ces axes sont perpendiculaires au plan de la figure 2. Les manchons 9 ont un logement 11 et le manchon 10 un logement 12.

La disposition des manchons de palier 8, 9 apparaît clairement à la figure 3. Ainsi, les éléments successifs de la courroie peuvent se relier les uns aux autres par la mise en place d'un axe dans le logement 10 et d'un axe dans le logement 11.

Bien que l'articulation la plus simple de deux éléments 4 consécutifs soit faite par la liaison entre les deux manchons 9 d'un élément et le manchon 10 de l'élément 4, suivant ou précédent, d'autres modes d'articulation avec un nombre plus grand ou plus faible de manchons est envisageable.

La partie intermédiaire 8 de l'élément 4' comporte une fenêtre 13 pour le passage du composant élastique non représenté. En partie supérieure, l'élément présente le talon 8 dont les faces 81, 82, avant et arrière dans le sens de défilement de la courroie (figure 2) sont sensiblement parallèles.

En vue de face, l'élément 4' de courroie présente une section trapézoïdale (figure 3) correspondant à la section des poulies 2, 3.

Selon la figure 3, les manchons 9 de palier présentent sur leur face extérieure tournée vers les poulies un décrochement respectif 14 pour la mise en place et la fixation de l'axe dans les logements 10 et de sa tête non représentée.

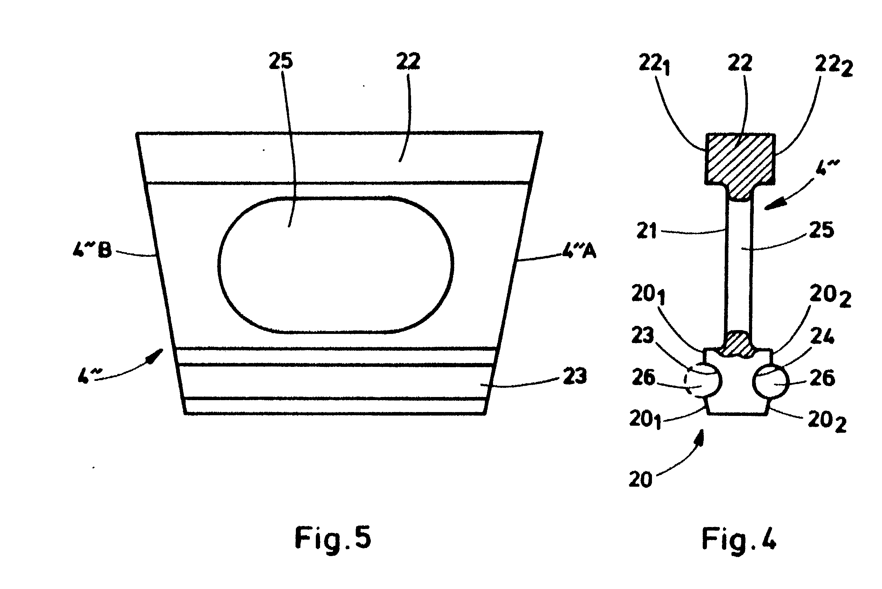

Les figures 4 et 5 montrent un second mode de réalisation d'un élément de courroie à double effet. Cet élément 4" se compose d'une base 20, d'une partie intermédiaire 21 et d'un talon 22. La base 20 présente sur ses faces 201, 202 avant et arrière deux logements 23, 24 de forme sensiblement semi-cylindrique de façon à pouvoir recevoir chacune un axe d'articulation 26 représenté schématiquement.

Comme dans l'exemple précédent, la partie intermédiaire 21 comporte une fenêtre 25 pour la mise en place du composant élastique non représenté.

La section de cet élément est également trapézoïdale, les angles d'inclinaison des faces latérales 4"A, 4"B correspondant aux angles des poulies 2, 3.

Contrairement à l'élément 4' de courroie selon les figures 2 et 3, l'élément 4" selon les figures 4 et 5, n'est pas destiné à être relié solidairement aux éléments 4" amont et aval mais seulement de façon articulée par une articulation libre constituée par les petits axes 26 placés dans les cavités adjacentes 23, 24 des éléments 4" de la courroie.

Sous l'effet de l'élasticité du composant qui relie les différents éléments, les axes 26 restent en place tout en assurant leur fonction d'articulation pour les éléments 4" lorsque la courroie décrit un arc de cercle en passant sur l'une ou l'autre poulie 2, 3.

Suivant une variante non représentée, les axes 26 sont remplacés par un bossage semi-cylindrique correspondant à l'axe 26 sur l'une des faces par exemple 202 alors que l'autre face 201 comporte le logement 23.

Il convient de remarquer, tant dans l'exemple des figures 2 et 3 que celui des figures 4 et 5 que les faces avant et arrière (71, 72, 221, 222) des bases 7, 22, sont sensiblement alignées avec l'axe géométrique des logements 9, 10 ou des cavités semi-cylindriques 23, 24. De la sorte, chaque élément 4, 4', 4" correspond à une figure géométrique à section rectangulaire. Cette assimilation à un rectangle est importante pour expliquer un mode de réalisation d'une courroie comme cela sera décrit ci-après :

Les éléments 4, 4', 4" de la courroie sont réalisés par différentes techniques telles que l'usinage à partir d'une barre profilée par exemple par un usinage automatique, par moulage par injection dans le cas d'éléments en bronze ou en matière plastique, par natriçage de précision, ou par découpage.

La seconde phase de fabrication concerne la réalisation du composant élastique sur les éléments ainsi fabriqués. Pour cela. ces éléments 4, 4', 4" sont placés dans un moule ayant un logement en forme de gorge circulaire dans lequel on déverse la matière élastique que l'on fait polymériser ou vulcaniser sur les éléments 4, 4', 4" ci-dessus.

Deux solutions sont envisageables, l'une est un moulage sans précontrainte et l'autre permet d'induire une précontrainte dans le composant élastique.

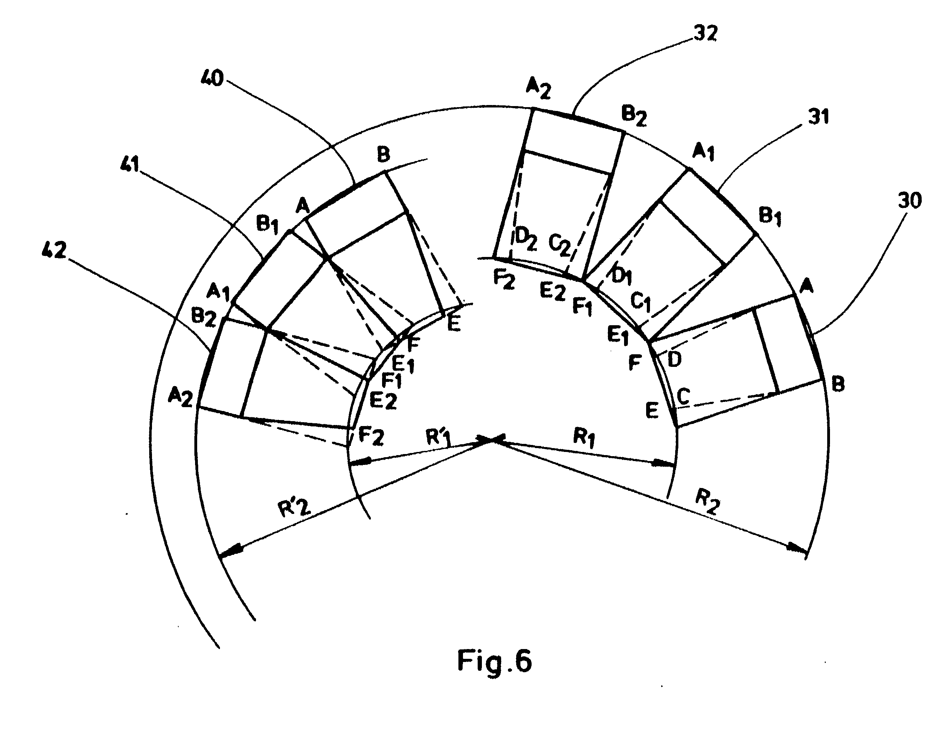

La figure 6 montre schématiquement ces deux procédés de fabrication d'une courroie à double effet selon l'invention.

A la figure 6, on a représenté les éléments 30, 31, 32, schématisés par leur contour rectangulaire (cf. figures 2 et 4). Pour mieux expliciter les caractéristiques du procédé, le contour rectangulaire a été fortement exagéré : cette forme rectangulaire est relativement compacte alors qu'en réalité la forme rectangulaire du contour d'un élément est très allongée.

Les différents éléments 30, 31, 32... sont identiques. Les sommets du rectangle ont été munis des références A, B, C, D, $A_1$, $B_1$, $C_1$, $D_1$, $A_2$, $B_2$, $C_2$, $D_2$. La base du rectangle a été tronquée de part et d'autre par une ligne en pointillés formant les sommets E, F, $E_1$, $F_1$, $E_2$, $F_2$ pour des raisons qui apparaîtront ultérieurement.

Pour un moulage sans précontrainte, les éléments 30, 31, 32, etc... sont placés dans un moule en forme de couronne de cercle, de rayon intérieur $R_1$ et de rayon extérieur $R_2$. Le rayon intérieur $R_1$ est celui du cercle obtenu en juxtaposant les bases C - D, $C_1$, $D_1$, $C_2$, $D_2$, etc... des éléments 30, 31, 32, etc....

Puis on coule ou on injecte la matière élastique que l'on fait polymériser ou vulcaniser dans la masse et sur les surfaces des éléments 30, 31.

Cette matière élastique pénètre et se solidifie non seulement dans les fenêtres des éléments de façon à former un cordon continu dans tous les éléments mais elle vient également dans les intervalles entre les éléments. Ainsi, la matière élastique constitue des parties en forme de coins $ADB_1$ ; $A_1$, $D_1$, $B_2$, etc. ... qui tendent à donner à la courroie une forme naturelle de couronne circulaire. Ce procédé de moulage de la matière élastique sur les éléments s'applique tant aux éléments 4' qu'aux éléments 4".

Ce procédé permet deux variantes :

Selon la première variante, les éléments 4' sont réunis par leurs axes avant leur mise en place dans le moule ou après leur mise en place mais avant l'introduction de la matière élastique. Dans le cas des éléments 4", les axes peuvent être mis en place lorsque les éléments 4" sont dans le moule.

Selon la seconde variante, les axes ne sont mis en place qu'après la réalisation du composant élastique, après le démoulage. Cette variante permet d'enlever toutes les bavures qui pourraient gêner le mouvement des articulations.

Pour réaliser un moulage avec précontrainte, on utilise, pour les mêmes éléments désignés maintenant par les références 40, 41, 42 .... un moule dont le logement est une couronne cirdulaire de rayons $R'_1$, $R'_2$ inférieurs aux rayons $R_1$, $R_2$ du moule du procédé précédent.

La diminution des rayons est rendue possible par une diminution de la forme des éléments au niveau de leurs côtés CD, $C_1$ $D_1$; $C_2$ $D_2$.... et leurs faces correspondantes à l'exception des faces des talons. Cette diminution a été représentée schématiquement par le contour A B E F, $A_1B_1E_1F_1$, $A_2B_2E_2F_2$ , etc... étant toutefois souligné que cette diminution n'est destinée qu'à permettre un moulage particulier, l'articulation entre les éléments lorsque la courroie est sortie du moule se faisant toujours aux sommets CD, $C_1$ $D_1$, $C_2$ $D_2$ ..... des contours rectangulaires.

Il est à remarquer que, par convention, pour faciliter la compréhension, la figure 5 montre cette diminution fortement exagérée.

Dans ces conditions, la matière élastique est introduite dans le moule. Cette matière ne peut venir dans les coins délimités entre les faces des talons.

Après durcissement de cette matière élastique, la courroie peut être démoulée.

On place alors la courroie sur un manchon de rayon $R_1$ de façon à allonger le cercle intérieur de la courroie et à faire coïncider les sommets (D et $C_1$) ; ($D_1$ et $C_2$), etc... pour la mise en place des axes.

Il en résulte une précontrainte dans le composant élastique ; cette précontrainte tend à déformer la courroie et à plaquer entre elles les faces des talons.

Le mode de fabrication décrit ci-dessus s'applique tant à un élément selon les figures 2 et 3, qu'à un élément selon les figures 4 et 5.

La courroie à double effet selon l'invention permet de transmettre au cours du même mouvement, des efforts de compression dans la partie du bras soumis à des efforts de compression et des efforts de traction dans la partie du brin soumis à des efforts de traction. Il en résulte un meilleur équilibrage des efforts et, par suite, un fonctionnement plus régulier et une plus grande fiabilité de la courroie pour variateur à poulie de diamètre utile variable.

## Revendications

1) Courroie à double effet notamment destinée à un variateur de vitesses à poulies de diamètre variable, courroie formée d'un ensemble d'éléments rigides (4, 4', 4") à section trapézoïdale correspondant à la section des poulies (2, 3), chaque élément ayant une base (6, 20), une partie intermédiaire (7, 21) et un talon (8, 22), les éléments étant articulés les uns par rapport aux autres et prenant appui les uns sur les autres, courroie caractérisée en ce que:
 - l'articulation des éléments (4, 4', 4") se fait à leur base (6, 20)
 - les talons (8, 22) ont des surfaces (81, 82; 221, 222) par lesquelles deux éléments consécutifs peuvent s'appuyer l'un contre l'autre,
 - un composant élastique (5) relie les éléments (4, 4', 4") au moins au niveau de leur partie intermédiaire (7, 21).

2) Courroie selon la revendication 1, caractérisée en ce que la partie intermédiaire (7, 21) des éléments (4, 4', 4") a une surface diminuée (fenêtres 13, 25) par rapport à la surface trapézoïdale d'ensemble de l'élément pour laisser de la place au composant élastique (5).

3) Courroie selon la revendication 1, caractérisée en ce que l'élément (4') comporte à sa base (6), des manchons de palier (9 et 10) destinés à être combinés respectivement aux manchons homologues (10 et 9) d'un élément amont et d'un élément aval par un axe d'articulation (12).

4) Courroie selon la revendication 3, caractérisée en ce que l'élément (4') comporte un manchon de palier (10) médian et deux manchons (9) qui, en vue de face, se situent de part et d'autre du manchon médian (10).

5) Courroie selon la revendication 1, caractérisée en ce que l'élément (4") comporte à sa base (20), de chaque côté, un logement semi-cylindrique (23, 24) pour recevoir une partie d'un axe d'articulation (26).

6) Courroie selon les revendications 1 et 5 caractérisée en ce que les faces (201, 202) de la base (20) sont diminuées et laissent des logements (23, 24) de dimensions inférieures à un demi-cylindre.

7) Courroie selon l'une quelconque des revendications 1 à 6, caractérisée en ce que les éléments (4, 4', 4") sont en métal.

8) Courroie selon l'une quelconque des revendications 1 à 7, caractérisée en ce que la section théorique de l'élément (4, 4', 4") est une section rectangulaire.

9) Procédé de fabrication d'une courroie à double effet, selon l'une quelconque des revendications 1 à 8, caractérisé en ce que:
 - on réalise les éléments (4, 4', 4"),
 - on les place dans un logement en forme de couronne circulaire dans un moule, en rapprochant les éléments suivant un cercle de rayon inférieur ($R'_1$, $R'_2$) au rayon correspondant de la courroie terminée ($R_1$, $R_2$),
 - puis on injecte la matière destinée à former le composant élastique (5) et on fait durcir,
 - on démoule l'ébauche pour la mettre au rayon définitif ($R_1$, $R_2$) et on met en place les axes des talons des éléments.

## Patentansprüche

1. Doppeltwirkender Treibriemen, insbesondere für stufenlos regelbare Getriebe mit Scheiben veränderlichen Durchmessers, wobei der Treibriemen von einer Einheit starrer Elemente (4, 4', 4") mit trapezförmigem Querschnitt entsprechend dem Querschnitt der Scheiben (2, 3) gebildet ist und jedes Element einen Basisteil (6, 20), einen Zwischenteil (7, 21) sowie einen Ansatz (8, 22) aufweist und die Elemente unter gegenseitiger Abstützung aneinander angelenkt sind, dadurch gekennzeichnet, daß
 die Anlenkung der Elemente (4, 4', 4" an ihrem Basisteil 6, 20) vorgenommen ist,
 die Ansätze (8, 22) mit Oberflächen (81, 82; 221, 222) versehen sind, mit denen sich aufeinanderfolgende Elemente gegenseitig abstützen können, und
 ein elastischer Bestandteil (5) die Elemente (4, 4', 4") zumindest in der Ebene ihres Zwischenteils (7, 21) miteinander verbindet.

2. Treibriemen nach Anspruch 1, dadurch gekennzeichnet, daß der Zwischenteil (7, 21) der Elemente (4, 4', 4") eine verkleinerte Oberfläche (Fenster 13, 25) in bezug auf die trapezförmige Oberfläche der Gesamtheit des Elements zum Platzlassen für den elastischen Bauteil (5) aufweist.

3. Treibriemen nach Anspruch 1, dadurch gekennzeichnet, daß das Element (4') an seinem Basisteil (6) Lagerbuchsen (9 o. 10) für die jeweilige Verbindung mit entsprechenden Buchsen (10 u. 9) eines vorauslaufenden und eines nachlaufenden Elements durch eine Gelenkachse (12) aufweist.

4. Treibriemen nach Anspruch 3, dadurch gekennzeichnet, daß das Element (4') eine mittlere Lagerbuchse (10) und zwei Buchsen (9) aufweist, die, in der Vorderansicht, beidseits der mittleren Buchse (10) gelegen sind.

5. Treibriemen nach Anspruch 1, dadurch gekennzeichnet, daß das Element (4") an seinem Basisteil (20) auf jeder Seite einen halbzylindrischen Lagersitz (23, 24) zur Aufnahme eines Bereichs einer Gelenkachse (26) aufweist.

6. Treibriemen nach den Ansprüchen 1 und 5, dadurch gekennzeichnet, daß die Flächen (201, 202) des Basisteils (20) verkleinert sind und Lagersitze (23, 24) mit einen Halbzylinder unterschreitenden Abmessungen belassen.

7. Treibriemen nach einem der Ansprüche 1 bis 6, dadurch gekennzeichnet, daß die Elemente (4, 4', 4") aus Metall bestehen.

8. Treibriemen nach einem der Ansprüche 1 bis 7, dadurch gekennzeichnet, daß der theoretische Querschnitt des Elements (4, 4', 4") ein rechteckiger Querschnitt ist.

9. Verfahren zur Herstellung eines doppeltwirkenden Treibriemens nach einem der Ansprüche 1 bis 8, dadurch gekennzeichnet, daß
 die Elemente (4, 4', 4") gebildet werden,
 diese in einen kreisringförmigen Raum in eine Form eingesetzt werden, indem die Elemente auf einem Kreis mit einem kleineren Radius ($R'_1$, $R'_2$)

gegenüber dem entsprechenden Radius des fertigen Treibriemens (R₁, R₂) aneinandergelegt werden,
sodann das zur Bildung des elastischen Bestandteils (5) bestimmte Material eingespritzt sowie
zum Aushärten gebracht wird und
das Formteil entformt wird, um es auf den endgültigen Radius (R₁, R₂) zu bringen, sowie die Achsen der Elementenansätze eingesetzt werden.

**Claims**

1. A double-action belt intended in particular for a
variable transmission with pulleys of variable diameter, said belt being formed by an assembly of rigid
elements (4, 4', 4") of trapezium-shaped section
corresponding to the section of the pulleys (2, 3),
each element having a base (6, 20), an intermediate
portion (7, 21) and an end piece (8, 22), the elements
being coupled relative to one another and being applied against one another, the belt being characterised in that
— the coupling of the elements (4, 4', 4") takes
place at their base (6, 20),
— the end pieces (8, 22) have surfaces (81, 82;
221, 222) by means of which two consecutive elements can bear against one another,
— a resilient component (5) connects the elements
(4, 4', 4") at least at the level of their intermediate portion (7, 21).

2. A belt according to claim 1, characterised in
that the intermediate portion (7, 21) of the elements
(4, 4', 4") is of smaller area (apertures 13, 25) relative to the trapezium-shaped area of the assembly
of the element so as to leave room for the resilient
component (5).

3. A belt according to claim 1, characterised in
that at its base (6) the element (4') comprises bearing bushes (9 and 10) intended to be linked respectively with homologous bushes (10 and 9) of an upstream element and a downstream element by a coupling pin (12).

4. A belt according to claim 3, characterised in
that the element (4') comprises a middle bearing
bush (10) and two bushes (9) which, in front view,
are disposed on either side of the middle bush (10).

5. A belt according to claim 1, characterised in
that at its base (20) the element (4") comprises, on
each side, a semi-cylindrical recess (23, 24) for accommodating part of a coupling pin (26).

6. A belt according to claims 1 to 5, characterised
in that the surfaces (201, 202) of the base (20) are
reduced and leave recesses (23, 24) of smaller
size than a semi-cylinder.

7. A belt according to any one of claims 1 to 6,
characterised in that the elements (4, 4', 4") consist of metal.

8. A belt according to any one of claims 1 to 7,
characterised in that the theoretical section of the
element (4, 4', 4") is a rectangular section.

9. A method of producing a double-action belt according to any one of claims 1 to 8, characterised in
that:
— the elements (4, 4', 4") are produced,
— they are placed in a circular, ring-shaped recess in a mould, the elements being brought together in a circle whose radius (R'₁, R'₂) is less
than the corresponding radius (R₁, R₂) of the fi-
nished belt,
— the material intended to form the resilient component (5) is then injected and caused to harden,
— the blank is removed from the mould and then
brought to the definitive radius (R₁, R₂) and the
pins of the end pieces of the elements are fitted.

Fig. 1

Fig. 2

Fig. 3

Fig. 5

Fig. 4

EP 0 203 852 B1

Fig.6

EP 0 203 852 B1